Europäisches Patentamt

European Patent Office

Office européen des brevets

(19)

(11) Publication number: **0 144 497**

**A1**

(12) **EUROPEAN PATENT APPLICATION**

(21) Application number: **84105842.3**

(22) Date of filing: **22.05.84**

(51) Int. Cl.⁴: **G 01 G 13/02**
**G 01 G 11/04**

(30) Priority: **13.12.83 JP 236576/83**

(43) Date of publication of application:
**19.06.85 Bulletin 85/25**

(84) Designated Contracting States:
**AT BE CH DE FR GB IT LI LU NL SE**

(71) Applicant: **Automatic Mechanical System Engineering Company**
**Toyama Building 16 Azuchimachi 1-chome**
**Higashi-ku Osaka(JP)**

(72) Inventor: **Matsumoto, Masato**
**6-1-509, Hirano Miyamachi 1-chome**
**Hirano-ku Osaka(JP)**

(74) Representative: **Glawe, Delfs, Moll & Partner**
**Patentanwälte**
**Postfach 26 01 62 Liebherrstrasse 20**
**D-8000 München 26(DE)**

(54) Apparatus for weighing bulk materials.

(57) Bulk materials are supplied on to a conveyor (15) one after another with the supply port (27) filled with the material. Since the pressure applied to the conveyor surface (15a) by the material is constant, what is called the fall error is eliminated. The material is carried by scrapers (19) secured to an endless chain (18).

FIG. 4

EP 0 144 497 A1

APPARATUS FOR WEIGHING BULK MATERIALS


The present invention relates to an apparatus for weighing bulk materials.

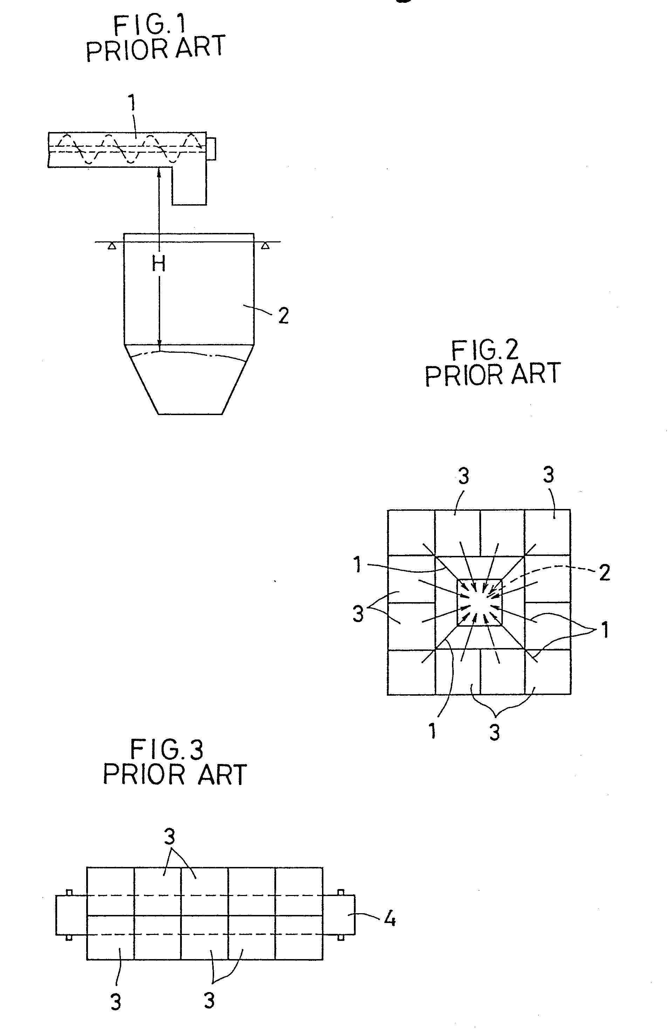

For the preparation of e.g. fodder, various bulk materials such as soybeans are weighed one after another and then mixed together. For this purpose, it has been a common practice as shown in Fig. 1 to use a screw conveyor 1 to feed a bulk material from a storage bin (not shown) to a hopper 2 provided with a weigher. The screw conveyor is stopped when a predetermined value is detected by the weigher. At the moment when the screw conveyor is stopped, some of the material is still falling from the supply port of the screw conveyor toward the surface of the material stacked in the hopper. Some error is caused by this falling material because when it reaches the surface of the material stacked, the weight of the material in the hopper will exceed the predetermined value by the weight of the falling material. This is what is called the fall error. This error has so far been compensated by taking this error into consideration beforehand. However, this way of compensating the error is not satisfactory in accuracy because the height of the material stacked in the hopper is not constant. Another trouble is that even after the stoppage of the screw conveyor, some of the material is additionally discharged by inertia from the discharge port of the screw conveyor.

If several kinds of bulk materials stored in separate material tanks 3 have to be put one after another into the hopper 2 and weighed as shown in Fig. 2, still another problem arises from the complicated arrangement of the material tanks and the conveyors for feeding the materials to the hopper. In order to eliminate the above-described disadvatages, it has already been proposed as shown in Fig. 3 to provide material tanks 3 along a belt conveyor 4 and provide each tank with a weigher so as to weigh each of several kinds of bulk materials separately before it is fed to the conveyor 4. Even in this arrangement, however, the above-mentioned error caused by the falling material remains unsolved. Furthermore, this arrangement proves to be expensive because it requires a plurality of weighers.

It is an object of the present invention to provide an apparatus for efficiently weighing bulk materials in which the above-mentioned fall error is eliminated.

In accordance with the present invention, there is provided an apparatus for weighing bulk materials, comprising a conveyor scale comprising a box-shaped outer frame, a fixed plate for stacking the material thereon, weight detector means for weighing said conveyor scale and the material stacked on said fixed plate, a material supply port disposed over said fixed plate by such a distance that the material supplied through said supply port will not spill off said fixed plate, an endless member, a plurality of scraper means mounted on said endless member at regular intervals for scraping the material stacked on said fixed plate, and damper means for shutting said material supply port as soon as the weight of the material stacked on said fixed plate reaches a predetermined value.

With the above-described object in view and as will become apparent from the following detailed description, the present invention will be more clearly understood in connection with the accompanying drawings, in which:

Fig. 1 is a schematic illustration of a conventional weighing apparatus;

Figs. 2 and 3 are schematic plan views of conventional weighing apparatuses;

Fig. 4 is a longitudinal sectional view of an embodiment of the present invention;

Fig. 5 is an enlarged transverse sectional side view thereof;

Fig. 6 is an enlarged horizontal sectional view of a part thereof;

Figs. 7, 8 and 10 are enlarged views of parts thereof;

Fig. 9 is a sectional view taken along line IX-IX of Fig. 8; and

Fig. 11 is a sectional view taken along line XI-XI of Fig. 10.

Fig. 12 is a view showing how the material is stacked in a conventional apparatus; and

Fig. 13 is a similar view to Fig. 12 for the apparatus embodying the present invention.

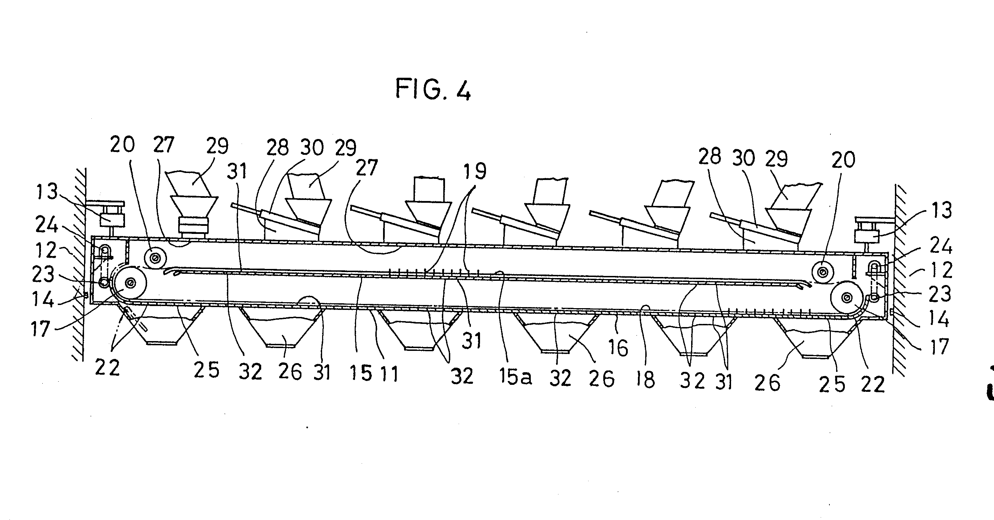

Referring to Fig. 4, an outer frame 11 in the shape of a square tube is supported between walls 12 by means of weight detectors 13 such as load cells. Buffers 14 such as a shock absorbing rubber are provided on the walls 12 opposite to the end faces of the outer frame 11.

A horizontal plate 15 is provided in the center of the outer frame 11 with spaces left between the ends of the plate 15 and the end faces of the outer frame 11. The upper surface 15a of the plate 15 constitutes an upper conveyor surface, while the interior bottom surface 16 of the outer frame 11 constitutes a lower conveyor surface. A pair of sprocket wheels 17 are provided at each end of the interior of the outer frame 11. (Fig. 4) One of these two pairs of sprocket wheels 17 is driven by a motor (not shown) mounted on the outer frame 11.

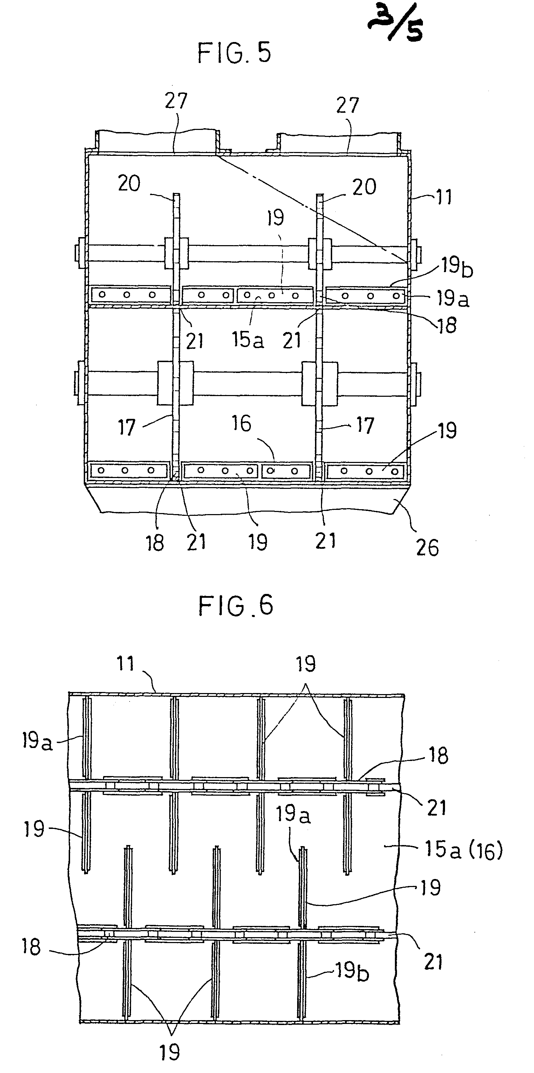

A roller chain 18 passes around each pair of the sprocket wheels 17. Each roller chain 18 is kept taut by a tension sprocket wheel 20 and allowed to run on rails 21 mounted on the upper and bottom surfaces 15a and 16 as shown in Fig. 5 so that the roller chain 18 may be prevented from running out of true.

Scrapers 19 are secured at regular intervals to the roller chains 18 so as to transversely extend therefrom in such a manner that the scrapers 19 extending toward each other between the two roller chains 18 come between each other as shown in Fig. 6. Each scraper 19 comprises a board 19a secured to the roller chain 18 and covered with a rubber sheet 19b.

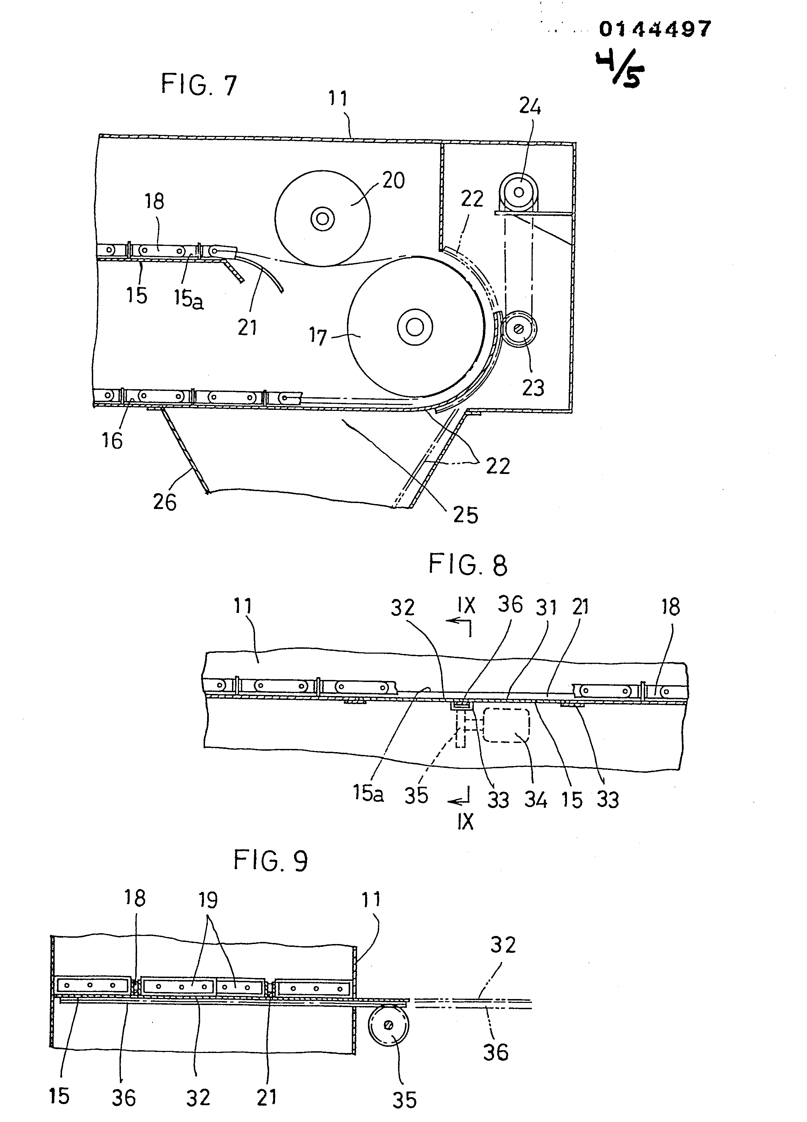

A guide plate or block plate 22 is provided along the periphery of each pair of sprocket wheels 17 as shown in Figs. 4 and 7, and is adapted to be moved upwardly therealong by a gear 23 when it is driven by a motor 24. A discharge port 25 is provided in each end portion of the bottom of the outer frame 11. Either one of these two discharge ports is opened when the block plate 22 is moved to a position shown by dot-dash lines in Fig. 7. The material which has been weighed can be carried out of either end of the outer frame 11 by opening either one of the two discharge ports 25 with the other closed.

Discharge ports 31 are provided in the plate 15 and between the two discharge ports 25 in the bottom plate 16 of the outer frame 11. Each port 31 is provided with a block plate 32 having a size corresponding to the port 31. As shown in Figs. 8-11, the block plate 32 is driven by a motor 34 through a rack 36 and a pinion 35 so as to transversely move along a pair of guides 33 and thereby open and close the discharge port 31.

When conveying the material for discharge, the distance to be covered by the scrapers 19 can be reduced by opening a port properly selected from among the discharge ports 25 and 31.

Discharge hoppers 26 are provided for the discharge ports 25 and 31 provided in the bottom plate 16 of the outer frame 11. When the block plate 22 or 32 is opened, the material which has been weighed is allowed to flow out. The discharge port of each hopper 26 can be freely opened and closed by a damper or the like so that the material may be discharged from any hopper and the remaining hoppers may serve as storage tanks.

Through a damper 30 and a bellows 28, the discharge pipe 29 of each material tank is connected to an inlet port 27 provided in the top plate of the outer frame 11. The length of the discharge pipe 29 can be determined so that the material remaining above the inlet port 27 may exert a constant pressure on the conveyor surface.

For example, its length is set to 2.5 to 2.0 times its diameter.

The outer frame 11 of this embodiment is box-shaped and tightly sealed. Therefore, one need not worry about the scattering of the material to be weighed and the distance from the inlet ports 27 to the weighing surface 15a may be left out of consideration.

In operation, any damper 30 is opened. The material to be weighed falls from the inlet port 27 and is stacked on the upper surface 15a of the plate 15 as shown by a dot-dash line in Fig. 5. The material stops flowing out of the inlet port 27 when it blocks up the inlet port.

When the roller chains 18 are driven, the material is moved by the scrapers 19. Consequently, the inlet port 27 gets unblocked so that additional material is allowed to fall on to the upper surface 15a. As long as the scrapers 19 move, the material continues to be discharged from the inlet port 27. The material falls on to the lower conveyor from either end of the plate 15. Now, the empty weight of the conveyor scale plus the weight of the material stacked on the conveyor surface is weighed by the load cells 13. The weight of the material stacked on the conveyor surface is obtained by subtracting the empty weight of the conveyor scale and the constant

- 8 -

pressure exerted by the material remaining above the inlet port 27 from the total of values obtained by the load cells 13.

The slide damper 30 closes when the total weight of the material stacked on the conveyor surface has come up to a predetermined value. The opening of the damper may be adjusted so as to be narrowed gradually as the predetermined value is approached. When the damper 30 is closed, the material in the conveyor is separated from the material in the discharge pipe 29. Consequently, the material remaining above the discharge port no longer exerts pressure on the conveyor surface, so that the material stacked on the conveyor surface can now be accurately weighed. In case of a short weight, the slide damper 30 is opened and additional material is allowed to fall on to the conveyor. A slide damper with an adjustable opening will enhance accuracy in weighing.

The chain may be driven at a higher speed until a certain amount of the material e.g, 95% of the predetermined value is reached and then it is slowed down.

The distance to be covered by the scrapers 19 can be reduced and the energy required for driving the roller chains 18 can be saved by opening the discharge port 31 disposed downstream but nearest to the discharge pipe 29 through which the material has been supplied.

-9-

A series of slide dampers 30 are opened and closed
one after another and the weighing process is repeated.
When all the weighing processes have been completed,
the materials are fed to a mixer for mixing or a truck.

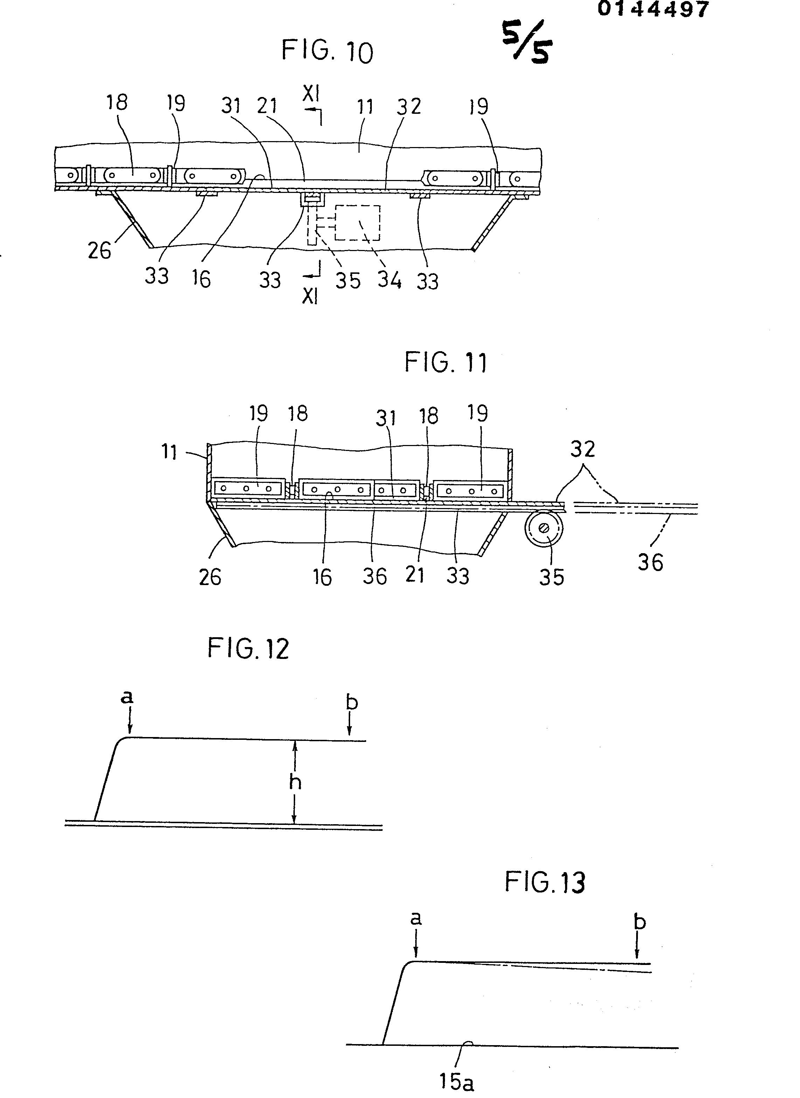

In a conventional arrangement as shown in Fig. 12,
the height $h$ of the first material $a$ remains unchanged
until the material $a$ reaches the position where the second
material $b$ is to be supplied on top thereof. Consequently,
the material $b$ has to be dropped either from a place
higher than the upper surface or in the rear of the material
$a$.

In the preferred embodiment, the upper surface of
the first material $a$ descends in a gradual slope as shown
in Fig. 13 as the material $a$ is moved by the scrapers
19. Therefore, the second material $b$ can be supplied
on top of the material $a$ without waiting for the material
$a$ to pass the inlet port 27 from which the material $b$
is to be supplied.

By opening any one of the block plates 22 and 32,
the material which has been weighed is dropped into one
of the discharge hoppers 26 and stored therein. The
block plate of another hopper may also be opened when
a single hopper 26 is not enough to admit all the material
which has been weighed.

In place of the roller chains 18, wire ropes or the like may be used. If the direction of rotation of the sprocket wheels 17 can be reversed so that either direction may be properly selected according to circumstances, the distance between the inlet port 27 from which the material was supplied and the discharge port 25 or 31 from which the material is to be discharged can be reduced.

The apparatus of the present invention may be provided only with the upper conveyor surface 15a, and the lower or return conveyor surface 16 may be omitted. In this case, the discharge hoppers 26 may be provided at the discharge ports 31 provided in the horizontal plate 15. Reversibility is essential for the direction of rotation of the sprocket wheels 17 if only the upper conveyor surface is provided.

What are claimed are:

1.　　An apparatus for weighing bulk materials, comprising a conveyor scale comprising a box-shaped outer frame, a fixed plate for stacking the material thereon, weight detector means for weighing said conveyor scale and the material stacked on said fixed plate, a material supply port disposed over said fixed plate by such a distance that the material supplied through said supply port will not spill off said fixed plate, an endless member, a plurality of scraper means mounted on said endless member at regular intervals for scraping the material stacked on said fixed plate, and damper means for shutting said material supply port as soon as the weight of the material stacked on said fixed plate reaches a predetermined value.

2.　　The apparatus as claimed in claim 1, wherein said conveyor scale has an upper conveying surface and a lower conveying surface, the material on the upper conveying surface being adapted to fall on to the lower conveying surface from at least one end thereof, said endless member running along said upper and lower conveying surface.

3.　　The apparatus as claimed in claim 2, wherein said upper conveying sarface is formed with a discharge port which can be selectively opened and closed as desired.


4.    The apparatus as claimed in claim 1, wherein said endless member can be driven in either direction.

FIG.1
PRIOR ART

1

H

2

FIG.2
PRIOR ART

3    3

1

2

3

1

1    3

FIG.3
PRIOR ART

3

4

3    3

FIG. 4

FIG. 5

FIG.6

0144497

4/5

FIG. 7

FIG. 8

FIG. 9

FIG. 7

FIG. 8

FIG. 9

FIG. 10

FIG. 11

FIG. 12

FIG. 13

0144497

European Patent Office

**EUROPEAN SEARCH REPORT**

Application number

EP 84105842.3

| | DOCUMENTS CONSIDERED TO BE RELEVANT | | |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | US - A - 3 884 313 (ENGELS) <br> * Fig. 1-3; column 2, line 64 - column 4, line 3 * <br> -- | 1,2 | G 01 G 13/02 <br> G 01 G 11/04 |
| A | J. REIMPELL, E. KRAKAU "Handbuch des Waagenbaues" 1st edition, vol. 2, 1959/60, "Selbstanzeigende und selbsttätige Waagen" <br> BERNH. FRIEDR. VOIGT, Verlag Handwerk und Technik, Berlin-Hamburg <br> pages 190-193 <br> * Page 190, last paragraph - page 192, line 2 * <br> -- | 1 | |
| A | EP - A1 - 0 095 095 (BÜHLER) <br> * Abstract; fig. 1 * <br> ---- | 1 | TECHNICAL FIELDS SEARCHED (Int. Cl.4) <br><br> G 01 G 13/00 <br> G 01 G 11/00 |

The present search report has been drawn up for all claims

| Place of search | Date of completion of the search | Examiner |
|---|---|---|
| VIENNA | 12-03-1985 | BURGHARDT |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82